(19) Europäisches Patentamt / European Patent Office / Office européen des brevets

(11) **EP 2 406 066 B1**

(12) **FASCICULE DE BREVET EUROPEEN**

(45) Date de publication et mention
de la délivrance du brevet:
**27.02.2019 Bulletin 2019/09**

(51) Int Cl.:
*B32B 5/02* (2006.01)    *B32B 1/08* (2006.01)
*B32B 7/12* (2006.01)    *F16L 11/08* (2006.01)
*B32B 27/36* (2006.01)   *B32B 27/40* (2006.01)
*B32B 27/12* (2006.01)   *B32B 27/30* (2006.01)
*B32B 27/34* (2006.01)   *B32B 27/08* (2006.01)

(21) Numéro de dépôt: **10708524.3**

(22) Date de dépôt: **10.03.2010**

(86) Numéro de dépôt international:
**PCT/EP2010/053024**

(87) Numéro de publication internationale:
**WO 2010/103036 (16.09.2010 Gazette 2010/37)**

(54) **TUYAU SOUPLE A RENFORT GUIPE ET PROCEDE DE FABRICATION ASSOCIE**

FLEXIBLES ROHR MIT UMWICKELTER VERSTÄRKUNG UND VERWANDTES
HERSTELLUNGSVERFAHREN

FLEXIBLE PIPE WITH A WRAPPED REINFORCEMENT AND RELATED PRODUCTION METHOD

(84) Etats contractants désignés:
**AT BE BG CH CY CZ DE DK EE ES FI FR GB GR
HR HU IE IS IT LI LT LU LV MC MK MT NL NO PL
PT RO SE SI SK SM TR**

(30) Priorité: **10.03.2009 FR 0901088**

(43) Date de publication de la demande:
**18.01.2012 Bulletin 2012/03**

(73) Titulaire: **Exel Industries
51200 Epernay (FR)**

(72) Inventeurs:
• **PINOIT, Dominique
F-51300 Pringy (FR)**
• **CARPENTIER, Fabien
F-51300 Lisse en Champagne (FR)**

(74) Mandataire: **Lavialle, Bruno François Stéphane et
al
Cabinet Boettcher
16, rue Médéric
75017 Paris (FR)**

(56) Documents cités:
**EP-A1- 0 821 035     WO-A1-95/13494**

**Description**

La présente invention a trait au domaine des tuyaux multicouches pour le transport sous pression et/ou à haute température de gaz ou de fluides, elle concerne plus particulièrement des tuyaux comportant une couche de renfort textile guipé.

Il est proposé sur le marché des tuyaux multicouches notamment en matière plastique permettant le transport sous pression et/ou à haute température de gaz tel que de l'air comprimé ou encore de fluides.

Pour conférer au tuyau la résistance nécessaire on intercale entre les couches plastiques un renfort qui selon les applications pourra être un renfort tricoté guipé ou tressé.

L'utilisation d'un tuyau comportant un renfort tricoté assure une bonne flexibilité au tuyau mais la résistance de ce type de tuyau est limitée à des pressions de service inferieure à 30 bars et des températures de service inférieure à 50°.

L'utilisation d'un tuyau comportant un renfort tressé permet d'obtenir des tuyaux présentant des résistances à la pression et à la température les plus élevées des trois types de renforts précités toutefois il présente des inconvénients et notamment le procédé de fabrication des tuyaux à renfort tressé est nécessairement discontinu compte tenu des débits faibles des tresseuses et d'autre part le poids de ce type de tuyau en fil est relativement important.

L'utilisation d'un tuyau comportant un renfort guipé permet de répondre à des contraintes intermédiaires en termes de pression et de température, la gamme d'utilisation d'un tuyau guipé recouvrant en partie les gammes d'utilisation des tuyaux tricotés et tressés.

Ce type de renfort est particulièrement intéressant puisqu'il permet notamment un processus de fabrication en continu aussi, dans la pratique, lorsque les conditions d'utilisation du tuyau sont compatibles avec celles d'un tuyau guipé ou tressé, on privilégie le tuyau guipé pour sa plus grande flexibilité et pour son procédé de fabrication, le guipage permettant l'utilisation de fibres standards, (sans traitement adhérisant), et un processus de fabrication continu.

Pour ces différentes raisons, les fabricants de tuyau essayent d'améliorer la résistance à la pression et à la température des tuyaux guipés, à cette fin une première voie explorée consiste à fabriquer un tuyau comportant deux renforts guipés mais cette voie implique les mêmes inconvénients qu'un tuyau tressé à savoir un procédé de fabrication discontinu et un poids en fil du tuyau élevé.

Une seconde voie consiste à réaliser un guipage avec des mailles serrées toutefois l'adhérence des couches thermoplastiques diminue avec la diminution de la surface libre de la couche sur laquelle repose le guipage et par conséquent il n'est pas possible dans les structures de tuyaux guipés actuels d'augmenter au delà d'une certaine limite le taux de surface occupé par la fibre. En effet lorsque l'adhérence entre les couches n'est pas suffisante, le renfort ne reste pas fixe et son déplacement peut entraîner un éclatement du tuyau.

WO 95/13494 décrit une canalisation comportant une âme interne multicouche dont la couche externe est en polyamide ou en EVOH, qui assure une fonction barrière efficace et une armature externe résistant à la pression. Ladite armature externe comporte au moins une structure filamentaire de renfort placée autour de l'âme, une couche extérieure de recouvrement et au moins un agent pour assurer la liaison de la structure de renfort à l'âme interne, choisi parmi les colles thermofusibles en polyamide ou polyuréthanne (hot melt) ou un polyester thermodurcissable.

OBJET DE L'INVENTION

La présente invention a pour but de proposer une structure de tuyau permettant de proposer des tuyaux à renfort guipé compatibles avec des pressions de service élevées, notamment supérieures à 250 bars, à des températures élevées.

Un autre objet de la présente invention est de proposer une structure de tuyau permettant la fabrication du tuyau par un processus continu.

Un autre objet de la présente invention est de proposer une structure de tuyau dans laquelle l'adhérence entre les couches est toujours supérieure à 1.5N/mm.

RESUME DE L'INVENTION

A cet effet la présente invention concerne un tuyau souple à renfort guipé comportant au moins une couche interne, une couche externe et un renfort guipé intercalé entre les couches interne et externe caractérisé en ce que le renfort est disposé entre deux couches de colle thermofusible pour adhérer aux couches interne et externe et tel que la surface libre effective de la couche interne est comprise entre 20 et 130cm2 par mètre linéaire de tuyau, la surface libre effective étant telle que définie dans la revendication 1.

La structure du tuyau, selon l'invention, permet par l'action des couches de colle d'augmenter l'adhésion entre l'ensemble des couches autorisant une surface libre, c'est-à-dire une surface de couche interne non recouverte par les fils du renfort guipé, amoindrie par rapport aux tuyaux guipés classiques tout en conservant une adhérence suffisante pour la stabilité du renfort. Cette caractéristique permet par conséquent de réduire la taille des mailles du guipage et donc d'améliorer la résistance à la pression du tuyau guipé.

BREVE DESCRIPTION DE LA FIGURE ANNEXEE

La présente invention sera mieux comprise à la lecture d'un exemple détaillé de réalisation en référence à la figure unique annexée, fournie à titre d'exemple non limitatif, et représentant un exemple de réalisation du tuyau guipé conforme à l'invention.

DESCRIPTION DETAILLE D'UN MODE DE REALISATION

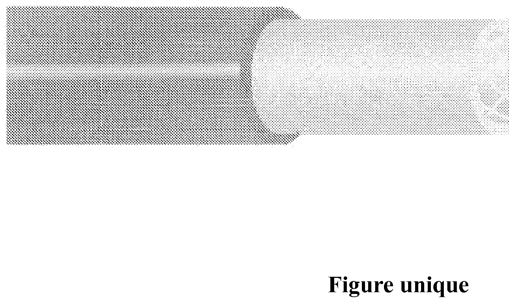

En se reportant à la figure 1 on voit représenté en vue éclaté un tuyau souple à renfort guipé 1 comportant une couche interne 2, une couche externe 3 et un renfort guipé 4. Le renfort 4 est intercalé entre les couches internes 2 et externe 3 et disposé entre deux couches de colle thermofusible 5a, 5b.

Dans l'état de la technique, on ne retrouve pas les couches de colle et l'adhésion est obtenue en prévoyant une surface libre importante pour permettre l'adhésion entre les couches interne 2 externe 3 et le renfort 4; l'adjonction des couches de colle 5a et 5b dans la structure de l'invention permet d'accroître l'adhésion entre les couches par rapport aux tuyaux guipés réalisés de manière classique et par conséquent permet de réduire la surface libre effective de la couche interne 2 entre 20 et 130cm2 par mètre linéique de tuyau tout en conservant une adhérence suffisante pour empêcher un détachement du renfort 4. La surface occupée par le renfort 4, plus importante que dans les tuyaux guipés classiques permet d'utiliser ces tuyaux à des pressions importantes et notamment supérieures à 250 bars.

Dans l'exemple de la figure annexée, les couches interne 2 et externe 3 sont réalisées à base de polychlorure de vinyle (PVC) et les couches de colle 5a et 5b sont des colles thermofusibles comportant du polyuréthane thermofusible (TPU) et de préférence de grade alimentaire. Le renfort 4 est ici de type polyester (PET) haute ténacité.

Cela étant, d'autres colles thermofusibles sont également envisageables et notamment on pourra employer pour la réalisation de ces couches 5a et 5b des colles mono composants ou multi composants choisis parmi les composés suivants :

- acétates de vinyle et leurs copolymères, mélanges et alliages,
- polyacrylates et leurs copolymères, mélanges et alliages,
- polyamides et leurs copolymères, mélanges et alliages,
- polyesters et leurs copolymères, mélanges et alliages,
- polyuréthanes et leurs copolymères, mélanges et alliages.

Ces colles, en plus de leur propriété d'adhérence, présentent d'importants avantages pour cette application aux tuyaux guipés et notamment sont coextrudables et compatibles avec le polychlorure de vinyle (PVC), elles ne comportent pas de solvants et offrent des temps de prise courts.

Pour le calcul de la surface effective il faut tenir compte de la surface de renforcement occupé par la fibre à laquelle il faut ajouter un premier facteur correctif correspondant à la surface de croisement des fils, un second facteur correspondant à l'aplatissement de la fibre et un troisième facteur correspondant aux effets de bord.

Le premier facteur et le troisième facteur viennent en soustraction de la surface libre effective tandis que le second facteur vient en augmentation.

Dans le cas d'un guipage 2*Nb (Nb nombre de fils ou nombre de fuseaux) et pour une longueur d'1 m on obtient en prenant une longueur d'hélice avec un pas P, un diamètre D et une épaisseur e, une surface renforcée donnée par la relation suivante :

$$\mathrm{Srenf} = 2e\mathrm{Nb}\sqrt{(1 + (\pi^2 D^2 / P^2))}$$

Le second facteur correspondant à l'aplatissement est noté A il augmente la surface renforcée d'un facteur (1+A). On notera que plus le fil est gros, plus il aura tendance à s'aplatir ; la grosseur d'un fil se définissant par sa nature et son titre avec une masse linéique exprimée couramment en décitex. La valeur du facteur A caractérisera ainsi la possibilité d'aplatissement de la fibre selon sa nature et son titre.

Le premier facteur correctif correspond à la surface de croisure des fils. En tenant compte de 2 croisures par fil et par pas P et pour un angle de croisement $\alpha$ entre les fils, la surface de croisure par mètre est donnée par la relation suivante :

$$S_{croisure} = 4Nb\ (1+A)^2e^2\cos\ \alpha\ \sin\ \alpha\ /P$$

Le troisième facteur correctif correspond aux effets de bord du renforcement qui provient des différentes possibilités de placement du renfort en fonction du guipage. A titre d'exemple un guipage 2*6 formera 36 trous par pas P alors qu'un guipage 2*15 en formera 226 par pas P, ce qui est moins favorable.

Ce troisième facteur correctif noté B se définit comme le rapport entre la structure de renforcement et une structure de référence. Avantageusement on considère que 5% de la surface libre de référence ne participe pas à l'adhésion. La structure de référence se définit comme un guipage 2*6 fuseaux (Nb) avec $Nb^2$ trous par pas P. Dans cette hypothèse le facteur correctif B est donné par la relation suivante :

$$B = 0.05Nb^2/36$$

La surface libre effective correspond à la surface renforcée tenant compte des trois facteurs correctifs elle est donnée par la relation

$$Slibre.eff = (1-B)(\pi.D - 2(1+A)eNb\sqrt{(1+\pi^2D^2/P^2)} + 4Nb(1+A)^2e^2\cos\alpha\sin\alpha\ /P)$$

Dans les tuyaux guipés de structure classique la surface libre effective est généralement bien supérieure à $200cm^2$/ m linéaire pour atteindre l'adhérence minimale de sorte qu'il n'est pas possible d'obtenir avec ces tuyaux des résistances élevées à la pression.

Dans la structure de tuyau guipé, telle que précitée, la surface libre effective peut être considérablement réduite et notamment comprise entre 20 et $130cm^2$ par mètre de tuyau 1 tout en conservant une adhérence supérieure à l'adhérence minimale admise de 1.5N /$mm^2$ et reprise dans la norme NF EN 28033.

Le procédé de fabrication du tuyau souple guipé 1 consiste à extruder l'ensemble des couches et à réaliser le guipage dans une opération continue, ainsi, l'ensemble des étapes de fabrication est réalisé en continu. A cette fin, le procédé consiste à co-extruder d'une part la couche interne 2 et la couche de colle 5a et d'autre part la couche externe 3 et la couche de colle 5b, ou de co-extruder l'ensemble des couches interne 2, de colle 5a et 5b, et la couche externe 3.

De manière à faciliter le placement et la tenue du renfort 4 on prévoit avant la pose de ce dernier une étape de mise en tension du fil autour de l'ensemble formé par la couche interne 2 et la couche de colle thermofusible 5a. Avantageusement, pour faciliter l'adhésion entre les couche de colle thermofusible 5a et 5b, on prévoit également une étape de chauffage de l'ensemble formé par la couche interne 2, la couche de colle thermofusible 5a et le renfort 4 avant la dépose de la colle thermofusible 5b. Ce chauffage vient faire fondre superficiellement la couche de colle thermofusible 5a sans altérer le renfort 4 augmentant ainsi le niveau d'adhérence du tuyau guipé 1.

Selon un mode de réalisation particulier le tuyau présente un diamètre intérieur compris entre 10 et 15mm, une surface libre effective de la couche interne 2 comprise entre 80 et 130 $cm^2$/m permettant une résistance à la pression limite de non éclatement supérieure à 250 bars et une adhérence entre le renfort et les couches interne et externe supérieure à 1.5N/$mm^2$. Cette structure permet l'obtention d'un tuyau permettant de répondre à un grand nombre d'applications auxquelles les structures classiques de tuyaux guipés ne sont pas adaptées.

Bien entendu, d'autres caractéristiques de l'invention auraient également pu être envisagées sans pour autant sortir du cadre de l'invention définie par les revendications ci-après.

## Revendications

1. Tuyau souple à renfort guipé comportant au moins une couche interne (2), une couche externe (3) et un renfort guipé (4) intercalé entre les couches interne (2) et externe (3) **caractérisé en ce que** le renfort guipé (4) est disposé entre deux couches de colle thermofusible (5a, 5b) pour adhérer aux couches interne (2) et externe (3) et tel que la surface libre effective de la couche interne (2) est comprise entre 20 et 130cm2 par mètre linéique de tuyau, la surface libre effective étant définie par :

$$Slibre.eff = (1-B)(\pi.D - 2(1+A)eNb\sqrt{(1+\pi^2D^2/P^2)} + 4Nb(1+A)^2e^2\cos\alpha\sin\alpha\ /P)$$

avec B un facteur correctif correspondant aux effets de bord et qui est donné par B = 0.05Nb$^2$/36 où Nb est un nombre de fils,

avec D, P et e respectivement un diamètre, un pas et une épaisseur d'hélice,

avec A un facteur correctif correspondant à l'aplatissement des fils,

et $\alpha$ un angle de croisement entre les fils.

2. Tuyau souple selon la revendication 1 dans lequel le tuyau présente un diamètre intérieur compris entre 10 et 15mm, une surface libre effective de la couche interne (2) comprise entre 80 et 130 cm$^2$/m permettant une résistance à la pression limite de non éclatement supérieure à 250 bars et une adhérence entre le renfort et les couches interne (2) et externe (3) supérieure à 1.5N/mm$^2$ qui est l'adhérence minimale admise reprise dans la norme NF EN 28033.

3. Tuyau souple selon la revendication 1 dans lequel la surface libre effective de la couche interne (2) est comprise entre 20 et 80 cm$^2$ par mètre linéique de tuyau.

4. Tuyau souple selon la revendication 1 dans lequel la colle thermofusible comprend du polyuréthane thermoplastique (TPU).

5. Tuyau souple selon l'une ou l'autre des revendications 1 et 2 dans lequel la colle thermofusible comprend un des composés suivant :

   - acétates de vinyle et leurs copolymères, mélanges et alliages,
   - polyacrylates et leurs copolymères, mélanges et alliages,
   - polyamides et leurs copolymères, mélanges et alliages,
   - polyesters et leurs copolymères, mélanges et alliages.

6. Tuyau souple selon la revendication 1 dans lequel les couches interne (2) et externe (3) sont à base de polychlorure de vinyle (PVC).

7. Procédé de fabrication d'un tuyau selon l'une quelconque des revendications précédentes dans lequel la couche interne (2) et la couche de colle (5a) et/ou la couche externe (3) et la couche de colle (5b) sont co-extrudées.

8. Procédé de fabrication du tuyau souple selon la revendication 7 comportant une étape de chauffage de l'ensemble formé par la couche interne(2), la couche de colle(5a) et le renfort (4) avant recouvrement par les couches de colle (5a) et externe (3).

9. Procédé de fabrication du tuyau souple selon l'une quelconque des revendications 7 et 8 dans lequel l'ensemble des étapes de fabrication est réalisé en continu.


**Patentansprüche**

1. Flexibles Rohr mit umwickelter Verstärkung, umfassend mindestens eine innere Schicht (2), eine äußere Schicht (3) und eine umwickelte Verstärkung (4), die zwischen der inneren Schicht (2) und der äußeren Schicht (3) angeordnet ist, **dadurch gekennzeichnet, dass** die umwickelte Verstärkung (4) zwischen zwei Schichten eines heißschmelzbaren Klebstoffs (5a, 5b) angeordnet ist, um an der inneren Schicht (2) und der äußeren Schicht (3) zu haften, und derart, dass die effektive freie Oberfläche der inneren Schicht (2) zwischen 20 und 130 cm2 pro Laufmeter Rohr beträgt, wobei die freie effektive Oberfläche definiert ist durch:

$$\text{Slibre.eff} = (1-B)(\pi.D - 2(1+A)eNb\sqrt{(1+\pi^2D^2/P^2)} + 4Nb(1+A)^2e^2\cos\alpha\sin\alpha/P)$$

mit B als einem Korrekturfaktor, der Randeffekten entspricht und der gegeben ist durch B = 0.05Nb$^2$/36, worin Nb eine Zahl an Fäden ist,

mit D, P und e jeweils als einem Durchmesser, einer Steigung und einer Stärke einer Verdrehung,

mit A als einem Korrekturfaktor, der der Fadenabflachung entspricht,

und $\alpha$ als einem Überkreuzungswinkel zwischen den Fäden.

**2.** Flexibles Rohr nach Anspruch 1, worin das Rohr einen Innendurchmesser hat, der zwischen 10 und 15 mm beträgt, eine effektive freie Oberfläche der inneren Schicht (2) zwischen 80 und 130 cm$^2$/m beträgt, die eine Festigkeit gegenüber dem Druck, bei dem noch keine Zersplitterung auftritt, von mehr als 250 Bar und eine Haftung zwischen der Verstärkung und den inneren Schichten (2) und äußeren Schichten (3) von mehr als 1,5N/mm ermöglicht, welche die minimale zulässige Haftung ist, die in der Norm NF EN 28033 aufgenommen ist.

**3.** Flexibles Rohr nach Anspruch 1, worin die effektive freie Oberfläche der inneren Schicht (2) zwischen 20 und 80 cm$^2$ pro Laufmeter Rohr beträgt.

**4.** Flexibles Rohr nach Anspruch 1, worin der heißschmelzbare Klebstoff ein thermoplastisches Polyurethan (TPU) enthält.

**5.** Flexibles Rohr nach Anspruch 1 oder 2, worin der heißschmelzende Klebstoff eine der folgenden Verbindungen enthält:

- Vinylacetate und ihre Copolymere, Mischungen und Legierungen,
- Polyacrylate und ihre Copolymere, Mischungen und Legierungen,
- Polyamide und ihre Copolymere, Mischungen und Legierungen,
- Polyester und ihre Copolymere, Mischungen und Legierungen.

**6.** Flexibler Schlauch nach Anspruch 1, worin die inneren Schichten (2) und die äußeren Schichten (3) auf Polyvinylchlorid (PVC) basieren.

**7.** Verfahren zum Herstellen eines flexiblen Rohrs nach einem der vorstehenden Ansprüche, bei dem die innere Schicht (2) und die Schicht aus Klebstoff (5a) und/oder die äußere Schicht (3) und die Schicht aus Klebstoff (5b) koextrudiert werden.

**8.** Verfahren zum Herstellen des flexiblen Rohrs nach Anspruch 7, umfassend einen Schritt des Erwärmens der aus der inneren Schicht (2), der Schicht aus Klebstoff (5a) und der Verstärkung (4) gebildeten Anordnung vor dem erneuten Bedecken mit der Schicht aus Klebstoff (5a) und der äußeren Schicht (3).

**9.** Verfahren zum Herstellen eines flexiblen Rohrs nach einem der Ansprüche 7 und 8, bei dem alle Herstellungsschritte kontinuierlich durchgeführt werden.

**Claims**

**1.** Flexible pipe having a covered reinforcement comprising at least one internal layer (2), one external layer (3) and a covered reinforcement (4) inserted between the internal layer (2) and the external layer (3), **characterized in that** the covered reinforcement (4) is positioned between two layers of hot-melt adhesive (5a, 5b) in order to adhere to the internal layer (2) and the external layer (3) and such that the effective free surface area of the internal layer (2) is between 20 and 130 cm$^2$ per linear metre of pipe, the effective free surface area being defined by:

$$\text{Sfree.eff} = (1-B)(\pi.D - 2(1+A)eNb\sqrt{(1+\pi^2 D^2/P^2)} + 4Nb(1+A)^2e^2\cos\alpha\sin\alpha/P)$$

with B a corrective factor corresponding to the edge effects and which is given by B = 0.05Nb$^2$/36, where Nb is a number of yarns,
with D, P and e respectively a helical diameter, pitch and thickness,
with A a corrective factor corresponding to the flattening of the yarns,
and $\alpha$ an angle of crossing between the yarns.

**2.** Flexible pipe according to Claim 1, in which the pipe exhibits an interior diameter of between 10 and 15 mm, an effective free surface area of the internal layer (2) of between 80 and 130 cm$^2$/m, making possible a limiting non-bursting pressure resistance of greater than 250 bars, and an adhesion between the reinforcement and the internal layer (2) and the external layer (3) of greater than 1.5 N/mm, which is the minimum accepted adhesion established in Standard NF EN 28033.

3. Flexible pipe according to Claim 1, in which the effective free surface area of the internal layer (2) is between 20 and 80 $cm^2$ per linear meter of pipe.

4. Flexible pipe according to Claim 1, in which the hot-melt adhesive comprises thermoplastic polyurethane (TPU).

5. Flexible pipe according to one or other of Claims 1 and 2, in which the hot-melt adhesive comprises one of the following compounds:

- vinyl acetates and their copolymers, blends and alloys,
- polyacrylates and their copolymers, blends and alloys,
- polyamides and their copolymers, blends and alloys,
- polyesters and their copolymers, blends and alloys.

6. Flexible pipe according to Claim 1, in which the internal layer (2) and the external layer (3) are based on polyvinyl chloride (PVC).

7. Process for the manufacture of a pipe according to any one of the preceding claims, in which the internal layer (2) and the layer of adhesive (5a) and/or the external layer (3) and the layer of adhesive (5b) are coextruded.

8. Process for the manufacture of the flexible pipe according to Claim 7, comprising a stage of heating the assembly formed by the internal layer (2), the layer of adhesive (5a) and the reinforcement (4) before covering with the layer of adhesive (5a) and the external layer (3).

9. Process for the manufacture of the flexible pipe according to either one of Claims 7 and 8, in which all of the manufacturing stages are carried out continuously.

Figure unique

**EP 2 406 066 B1**

## RÉFÉRENCES CITÉES DANS LA DESCRIPTION

**Documents brevets cités dans la description**

- WO 9513494 A